# EUROPEAN PATENT SPECIFICATION

(11) **EP 2 584 798 B1**
(45) Date of publication and mention of the grant of the patent: **11.03.2020**
(21) Application number: 11797473.3
(22) Date of filing: 21.06.2011
(51) Int. Cl.: H04L 12/24, H04L 12/18, H04L 12/58, H04W 4/50, H04W 76/40, H04L 29/06, H04W 4/06

(54) **METHOD, DEVICE, AND USER EQUIPMENT FOR OBTAINING SERVICE RECEPTION STATE OF USER EQUIPMENT SIDE BY NETWORK SIDE**
VERFAHREN, VORRICHTUNG UND BENUTZERENDGERÄT ZUR ERMITTLUNG DES DIENSTEMPFANGSSTATUS AUF BENUTZERENDGERÄTSEITE DURCH DIE NETZSEITE
PROCÉDÉ, DISPOSITIF ET TERMINAL UTILISATEUR PERMETTANT D'OBTENIR UN ÉTAT DE RÉCEPTION DE SERVICE D'UN CÔTÉ TERMINAL UTILISATEUR PAR UN CÔTÉ RÉSEAU

(30) Priority: 21.06.2010 CN 201010212320
(43) Date of publication of application: 24.04.2013
(73) Proprietor: China Mobile Communications Corporation, Beijing 100032 (CN)
(72) Inventor: Gao, Youjun, Beijing 100032 (CN); HU, Zhenping, Beijing 100032 (CN)
(74) Representative: EP&C
(86) International application number: PCT/CN2011/001038
(87) International publication number: WO 2011/160442

(56) References cited:
- EP-A1- 1 631 000
- WO-A1-2009/027529
- WO-A1-2009/145688
- CN-A- 101 400 113
- CN-A- 101 507 300
- CN-A- 101 686 433
- Huawei: "Further enhancements to MBMS for LTE; 3GPP DRAFT RP-100691", 3rd Generation Partnership Project (3GPP), 1 June 2010 (2010-06-01), XP055374192, Retrieved from the Internet: URL:http://www.3gpp.org/ftp/tsg_ran/TSG_RA N/TSGR_48/Docs/RP-100691.zip [retrieved on 2017-05-18]
- HUAWEI: "MBMS reception status reporting; 3GPP DRAFT R2-103978", 3RD GENERATION PARTNERSHIP PROJECT (3GPP), 22 June 2010 (2010-06-22), XP050605246, [retrieved on 2010-06-22]

## Description

### BACKGROUND OF THE INVENTION

### FIELD OF THE INVENTION

This disclosure relates to a communication field and particularly to a method, device and UE (user equipment) for obtaining a service reception state of a UE side from a network side.

### DESCRIPTION OF THE PRIOR ART

In an MBMS (Multimedia Broadcast Multicast Service) system of R9 (Release 9) of LTE (Long Term Evolution), the network side issues an occupation information of the MBMS through a system broadcast message and an MCCH (MBMS point-to-multipoint Control Channel) and the UE(s) obtain a resource configuration information of the MBMS by reading the system broadcast message and the contents on the MCCH, and accordingly the UE(s) receive the MBMS by employing a corresponding resource.

The MCCH message is a message adhered to the MBMS and comprises: an MBMS information for indicating the MBMS available to UE(s) in each cell; and for each MBMS, a service ID (identity), a session ID, a resource configuration of each service and a wireless carrier release indicator and the like.

When the MBMS changes, for example when a new MBMS is generated or a new MBMS session takes place, the network side needs to notify the UE(s) of it. Specifically speaking, the network side transmits a notification notifying a change of the MCCH to UE(s). When a UE receives the notification, it listens to the MCCH to obtain a changed MCCH message and to receive the MBMS according to the changed MCCH message accordingly.
However, in the MBMS system specified in the LTE R9, there is only a downlink MBMS transmission and the network side may not obtain the service state of the MBMS at the UE side. Although currently a need for obtaining the service state of the MBMS of the UE side from the network side so as to optimize an issuance policy for the MBMS is proposed, there is still no actual technical solution as to how to obtain the service state of the MBMS of the UE side from the network side.
WO2009/027529A1 relates to a simple and effective mechanism to determine and utilize information about idle user equipment which received MBMS services for purposes of audience monitoring. The implementation can be done by defining a new information element for a proposed MBMS status information and embedding the new IE into a UE-originated message of a network control signaling procedure.
Non-patent literature by Huawei entitled "Further enhancements to MBMS for LTE; 3GPP DRAFT RP-100691", 3GPP, 1 June 2010 (2010-06-01), XP0553741 92 relates to a standard about LTE Release 9 in 3GPP. In Release-9 a core set of MBMS features was specified.
There is a need to further evolve this feature set in order to make the MBMS of LTE competitive.

### SUMMARY OF THE INVENTION

The present invention relates to methods, a network side device, and a UE, as defined in the claims, for obtaining a service reception state of a UE side from a network side so that the network side may obtain the service reception state of the MBMS of the UE, which facilitates optimizing an issuance policy for the MBMS.

### BRIEF DESCRIPTION OF THE DRAWINGS

Fig. 1 is a flow chart showing a method for a network side to obtain a service reception state of a UE side according to an embodiment of the present disclosure;
Fig. 2 is a flow chart showing a method for receiving a signaling message newly added and dedicated to notify the UE(s) to respond the service reception state of an MBMS and responding the service reception state of the MBMS according to a broadcast message from the network side according to an embodiment of the present disclosure;
Fig. 3 is a schematic diagram showing a structure of a device for obtaining a service reception state of a UE side from a network side;
Fig. 4 is a flow chart showing a method for responding a service reception state according to an embodiment of the present disclosure; and
Fig. 5 is a schematic diagram showing a structure of a UE according to an embodiment of the present disclosure.

### DETAILED DESCRIPTION OF THE PREFERRED EMBODIMENTS

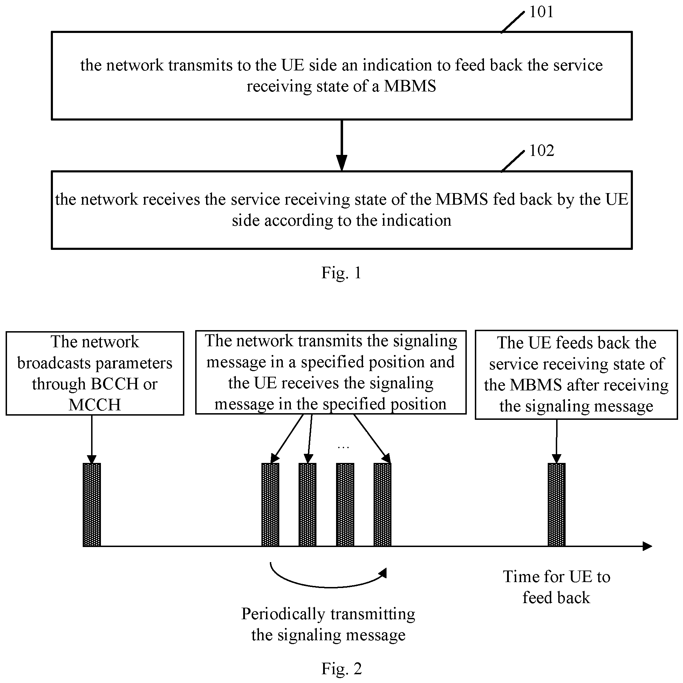

Fig. 1 is a flow chart showing a method for a network side to obtain a service reception state of a UE side according to an embodiment of the present disclosure.

As shown in Fig. 1, the method comprises the following steps.

In step 101, the network side transmits to the UE(s) an indication to respond the service reception state of an MBMS.

The network side may set an indication indicating the UE(s) to respond the service reception state of the MBMS in a system broadcast message indicating the MBMS, in a MCCH message transmitting the MBMS and a resource configuration, in a physical layer signaling message, or in a signaling message newly added and dedicated to notify the UE(s) to respond the service reception state of the MBMS.

The indicator may take up one bit or take up a bit string constituted by multiple bits. The bit string may indicate the UE(s) to respond the service reception states of all or a part of the MBMSs, or different bits within the bit string may indicate the UE(s) to respond the service reception state of different types of MBMSs, or the bit string may indicate the UE(s) in different MBSFNs (Multimedia Broadcast Single Frequency Network) to respond the service reception state of the MBMS, or the bit string may indicate the UE(s) to respond the service reception state of some specified MBMSs.

In step 102, the network side receives the service reception state of the MBMS responded by the UE(s) according to the indication.

Embodiments of the present disclosure will be illustrated in detail with reference to different messages carrying the indicator.

When the network side sets an indication indicating the UE(s) to respond the service reception state of the MBMS in a system broadcast message indicating the MBMS, it may set in the system broadcast message a first indication indicating all the UE(s) to respond the service reception state of the MBMS; or set in an MBSFN configuration information of the system broadcast message a second indication indicating the UE(s) within a corresponding MBSFN area (i.e., receiving the MBMS from a corresponding MBSFN area) to respond the service reception state of the MBMS.

At present, the system broadcast message indicating the MBMS comprises a SIB 13 (System Information Block 13 , SIB13). According to the embodiments of the present disclosure, the first indication and the second indication may be set in different positions of the SIB 13 to indicate the UE to respond the service reception state of the MBMS.

An example will be illustrated with reference to setting the first indication and the second indication in a corresponding message body of the LET R9 system.

The position of the first indication in the SIB 13 message body is as follows:

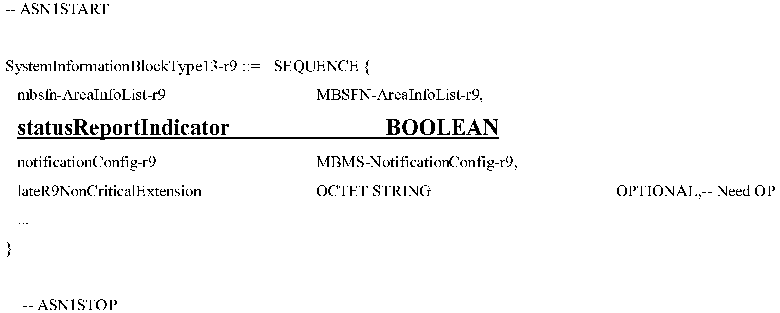

The bolded and underlined "statusReportIndicator BOOLEAN" represents the first indication, which is out of a configuration information body of respective MBSFNs.

The position of the second indication in the SIB 13 message body is as follows:

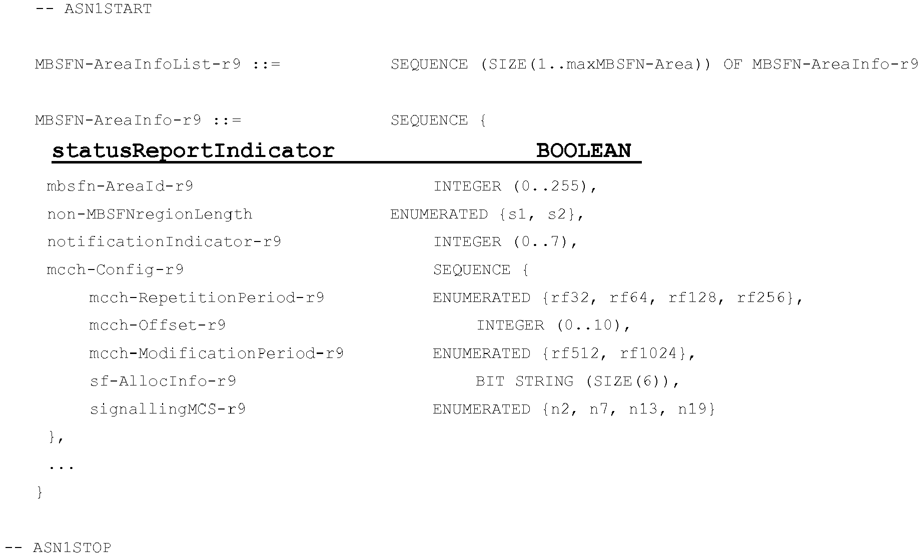

The bolded and underlined "statusReportIndicator BOOLEAN" represents the second indication, which is within a configuration information body of a MBSFN.

When the second indication is set in the configuration information body of the MBSFN, UE(s) in a specified area may be indicated to respond the service reception state of the MBMS, i.e., UE(s) receiving the MBMS in the specified MBSFN area are indicated to respond the service reception state of the MBMS, which is convenient for considering the service reception state of the MBMS in different areas.

The method for setting the first indication and the second indication in a corresponding message body of the other version systems is the same as that of the LTE R9 system and thus will not be illustrated in detail here.

When the network side sets an indication indicating the UE to respond the service reception state of the MBMS in a MCCH message transmitting a service and resource configuration of the MBMS, it may set in the MCCH message a third indication indicating the UE to respond all the service reception states of all the MBMSs or of some specific MBMSs; or set in an MBMS configuration information of the MCCH message a fourth indication indicating the UE to respond the service reception state of the MBMS.

According to the embodiment of the present disclosure, the third indication and the fourth indication may be set in different positions in the MCCH message to indicate the UE to respond the service reception state of the MBMS. An example will be illustrated with reference to the LTE R9 system.

The position of the third indication in the MCCH message is as follows:

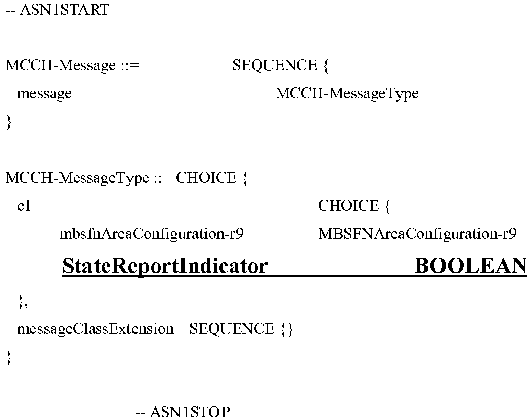

The bolded and underlined "statusReportIndicator BOOLEAN" represents the third indication.

In addition, the third indication may be set in the MCCH message as follows:

```
 Message StateReportIndicator {
 Service ID 1
 Service ID 2
 Service ID n
 }
 in which n is a natural number.
```

According to the above method for setting the third indication, some or all MBMSs may be extracted from the MBMSs issued from the network side, so as to indicate the UE(s) to respond the service reception state of the extracted MBMSs.

The position of the fourth indication in the MCCH message is as follows:

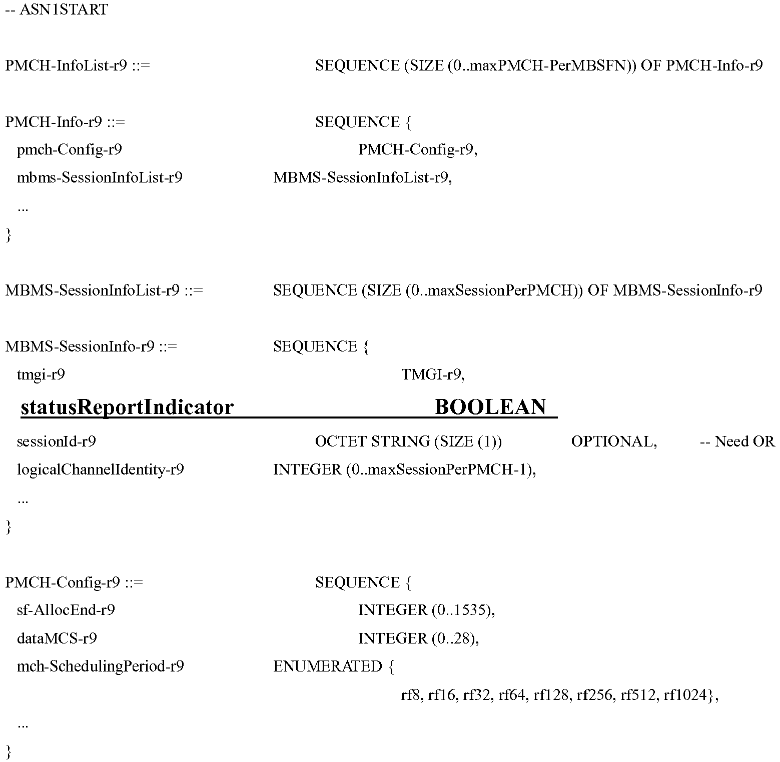

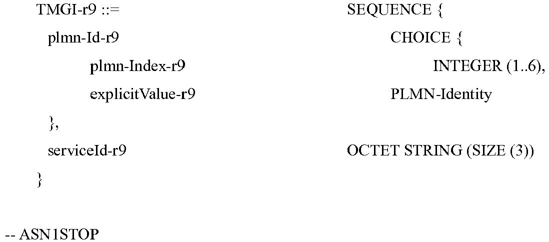

The bolded and underlined "statusReportIndicator BOOLEAN" represents the fourth indication, which is within a configuration information body of the MBMS.

The method for setting the third indication and the fourth indication in a corresponding message body of the other version systems is the same as that of the LTE R9 system and thus will not be illustrated in detail here.

By setting the third indication for the specified MBMSs in the MCCH message or by setting the fourth indication in the configuration information body of the MCCH message, the network side may obtain the service reception state of the specified MBMS so as to avoid obtaining the service reception state of the unnecessary MBMS and to save network resource.

When the network side sets the indication indicating the UE(s) to respond the service reception state of the MBMS in the physical layer signaling message which is typically for notifying a content change of the MCCH, remaining bits except bits which represent the content change of the MCCH corresponding to each MBSFN area in the signaling message used to notify the content change of the MCCH or remaining values except values which indicate the content change of the MCCH in the whole signaling message may be set to indicate the UE(s) to respond the service reception state of the MBMS, which is helpful to save signaling resource and to improve a utilization of the signaling message.

When the network side sets the indication indicating the UE(s) to respond the service reception state of the MBMS in the newly added and dedicated signaling message, the newly added and dedicated signaling message may be a RRC (Radio Resource Control) layer signaling message, a MAC (Medium Access Control) layer signaling message, or a physical layer signaling message. In addition, the newly added RRC layer signaling message may be a newly added BCCH (Broadcast Control Channel) or a newly added MCCH message.

The network side broadcasts a period and/or time offset amount and/or number of times of transmitting the signaling message newly added and dedicated to notify the UE(s) to respond the service reception state of the MBMS through the system broadcast message or the MCCH message, or broadcasts a period and/or time offset amount and/or number of times of transmitting the signaling message newly added and dedicated to notify the UE(s) to respond the service reception state of the MBMS through the system broadcast message or the MCCH message and a period and/or time window and/or number of times for the UE(s) to respond the service reception state of the MBMS, so that after each UE receives the broadcast message, it may receive the newly added signaling message by using a corresponding resource and respond the service reception state of the MBMS according to the signaling message.

The method for receiving the signaling message newly added and dedicated to notify the UE(s) to respond the service reception state of the MBMS and for responding the service reception state of the MBMS according to the broadcast message from the network side will be illustrated with reference to Fig. 2.

Fig. 2 is a flow chart showing a method for receiving a signaling message newly added and dedicated to notify the UE(s) to respond the service reception state of an MBMS and for responding the service reception state of the MBMS according to a broadcast message from the network side according to an embodiment of the present disclosure.

As shown in Fig. 2, the network side notifies a position of the signaling message carrying the indicator indicating the UE(s) to respond the service reception state of the MBMS through the BCCH or the MCCH. The network side may broadcast the period and/or time offset amount and/or number of times of transmitting the signaling message and may broadcast the period and/or time window and/or number of times for the UE(s) to respond the service reception state of the MBMS. The network side may transmit in the position the signaling message carrying the indicator indicating the UE(s) to respond the service reception state of the MBMS, and each UE may receive the signaling message in the position and respond the service reception state of the MBMS according to specified parameters, such as the number of times of responding the service reception state of the MBMS. For example, in Fig. 2, the number of times for each UE to respond the service reception state of the MBMS is once, i.e. the UE may only respond once for the same service reception state of the MBMS and the time window for the UE to respond the service reception state of the MBMS is also one (of course it may be N, i.e. the UE may respond information at the Nth sub-frame after receiving the indication). Parameters such as the period and the number of times for the UE to respond the service reception state of the MBMS may be negotiated and agreed in advance with the network side and the network side does not need to issue the parameters through the broadcast message. For example, when the period or the time offset amount is preset to be equal to a known parameter or a multiple of the known parameter, the network does not need to issue the period or the time offset amount.

The UE receives the signaling message in the corresponding position according to the parameters broadcasted from the network side. For example, when a result of a modulo operation on the period for transmitting the signaling message in a current system sub-frame equals to the time offset amount broadcasted from the network side, the UE will receive the signaling message in the current system sub-frame.

The service reception state of the MBMS responded by the UE(s) according to the indication may comprise: whether a UE will receive the MBMS, the MBSFN area ID information corresponding to the MBMS or the MBMS ID responded by a UE. The MBSFN area ID information corresponding to the MBMS or the MBMS ID may be directly responded to the network side, or the bit string constituted by multiple bits may be set in a response message, in which different bits in the bit string may be mapped to specified MBSFN area indicator or MBMS ID.

The MBSFN area indicator is different from the MBMS ID. The MBMSs with the same ID in different MBSFN areas may be different. Therefore, according to the MBSFN area indicator and the MBMS ID, it may be uniquely determined the MBMS of which a UE has responded the service reception state. Therefore, accuracy for the network side to determine the service reception state of the MBMS responded by a UE can be improved.

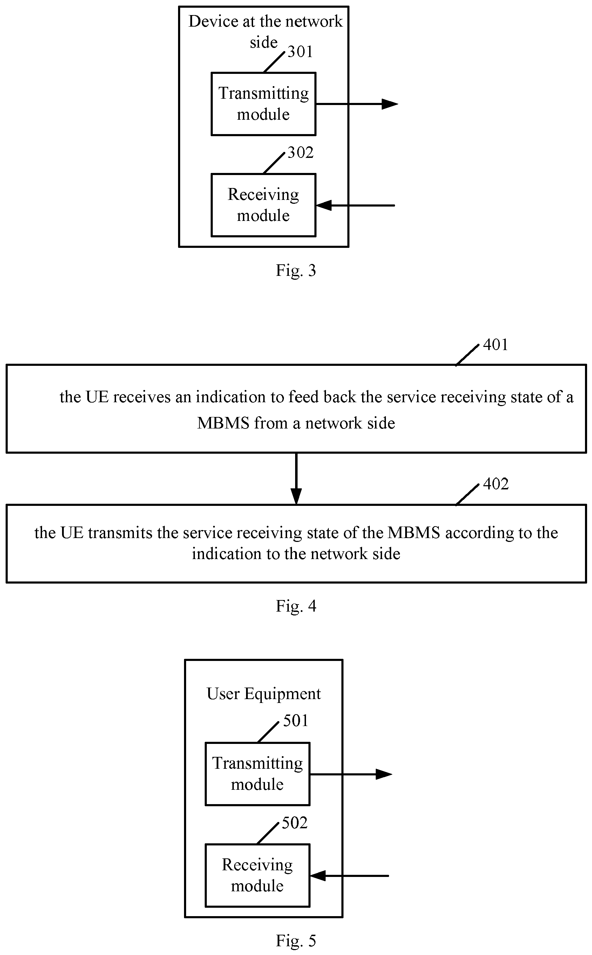

According to an embodiment of the present disclosure, a device for obtaining a service reception state of a UE side from a network side is provided. The device will be illustrated with reference to Fig. 3.

Fig. 3 is a schematic diagram showing a structure of a device for obtaining a service reception state of a UE side from a network side.

As shown in Fig. 3, the device may comprise a transmitting module 301 and a receiving module 302.

The transmitting module 301 may be configured to transmit to the UE side an indication to respond the service reception state of an MBMS. The receiving module 302 may be configured to receive the service reception state of the MBMS responded by the UE side according to the indication.

Specifically speaking, the transmitting module 301 may comprise a setting sub-module and a transmitting sub-module. The setting sub-module may be configure to set an indication indicating the UE(s) to respond the service reception state of the MBMS in a system broadcast message indicating the MBMS, in a MCCH message transmitting a resource configuration of the MBMS, in a physical layer signaling message, or in a signaling message newly added and dedicated to notify the UE(s) to respond the service reception state of the MBMS. The transmitting sub-module may be configured to transmit a message carrying the indicator to the UE(s).

The setting sub-module may set in the system broadcast message a first indication indicating all the UE(s) to respond the service reception state of the MBMS; or set in an MBSFN configuration information of the system broadcast message a second indication indicating the UE(s) receiving the MBMS from a corresponding MBSFN area to respond the service reception state of the MBMS.

The setting sub-module may also set in the MCCH message a third indication indicating the UE(s) to respond all the service reception states of all the MBMSs or of specific MBMSs; or set in an MBMS configuration information of the MCCH message a fourth indication indicating the UE(s) to respond the service reception state of the MBMS.

The setting sub-module may also set remaining bits except bits which represent the content change of the MCCH corresponding to each MBSFN area in the signaling message used to notify the content change of the MCCH or remaining values except values which indicate the content change of the MCCH in the signaling message indicate the UE(s) to respond the service reception state of the MBMS.

According to an embodiment of the present disclosure, a method for responding a service reception state is provided, which will be illustrated with reference to Fig. 4. As shown in Fig. 4, the method may comprise the following steps.

In step 401, a UE receives an indication to respond the service reception state of an MBMS from a network side.

In step 402, the UE transmits the service reception state of the MBMS according to the indication to the network side.

The UE may receive a message carrying an indicator indicating the UE to respond the service reception state of the MBMS and the message may comprise a system broadcast message indicating the MBMS, a MCCH message transmitting the MBMS and a resource configuration, a physical layer signaling message, or a signaling message newly added and dedicated to notify the UE(s) to respond the service reception state of the MBMS. The UE may transmit the service reception state of the MBMS according to the indication to the network side.

The service reception state of the MBMS from the UE side to the network side may comprise an MBSFN area ID information corresponding to the service reception state of the MBMS responded by the UE.

The service reception state of the MBMS from the UE side to the network side may further comprise an MBMS ID information corresponding to the service reception state of the MBMS responded by the UE.

According to an embodiment of the present disclosure, a UE may be provided, which will be illustrated with reference to Fig. 5.

Fig. 5 is a schematic diagram showing a structure of a UE according to an embodiment of the present disclosure.

As shown in Fig. 5, the UE may comprise a receiving module 501 and a transmitting module 502.

The receiving module 501 may be configured to receive an indication to respond the service reception state of an MBMS from a network side. The transmitting module 502 may be configured to transmit the service reception state of the MBMS according to the indication to the network side.

The receiving module 501 may receive a message carrying an indicator indicating the UE(s) to respond the service reception state of the MBMS and the message may comprise a system broadcast message indicating the MBMS, an MCCH message transmitting the MBMS and a resource configuration, a physical layer signaling message or a signaling message newly added and dedicated to notify the UE(s) to respond the service reception state of the MBMS. The transmitting module 502 may transmit the service reception state of the MBMS according to the indication to the network side.

The service reception state of the MBMS transmitted by the transmitting module 502 to the network side may comprise an MBSFN area ID information corresponding to the service reception state of the MBMS responded by the UE and may further comprise an MBMS ID information corresponding to the service reception state of the MBMS responded by the UE.

Apparently, those skilled in the art may make any changes and modifications within the scope of claims and their equivalents, the present disclosure is intended to include all these changes and modifications.

Those skilled in the art may understand that the embodiments of the present disclosure may be implemented as a method, a system or a computer program product. Therefore, the present disclosure may be implemented by hardware solely, by software solely or by a combination of the hardware and software. Moreover, the present disclosure may be implemented by a computer program product as a computer readable storage medium (including but not limited to disk storage, CD-ROM and optical storage) storing computer readable program codes.

The present disclosure is illustrated with reference to flow charts and/or block diagrams of the method, device (system) and computer program product of the embodiments. It should be understood that the computer program instructions may realize each step and/or block and combinations of steps and/or blocks in the flow charts and/or block diagrams. These computer program instructions may be provided to a general purpose computer, a dedicated computer, an embedded processing machine or other programmable data processing device to generate a machine so that the computer or other programmable data processing device may execute the instructions to generate an apparatus to implement specified functions in one or more steps of the flow charts and/or one or more blocks of the block diagrams.

These computer program instructions may be stored in the computer readable storages that may boot the computer or other programmable data processing device to work to produce the instructions to generate a product comprising an instruction apparatus. The instruction apparatus implements specified functions in one or more steps of the flow charts and/or one or more blocks of the block diagrams.

These computer program instructions may be loaded in the computer or other programmable data processing device so that the computer or other programmable data processing device may execute a series of operation steps to generate the process realized by the computer and the instructions executed may implement specified functions in one or more steps of the flow charts and/or one or more blocks of the block diagrams.

Although explanatory embodiments have been shown and described, those skilled in the art may make changes and modifications to these embodiments when having basic idea of inventiveness. Therefore, the claims are intended to comprise preferred embodiments and changes and modifications falling into the scope of the present disclosure.

The above are only preferred embodiments and are not intended to limit the present disclosure. All changes, alternatives, and modifications falling into the scope of the claims and their equivalents are included in the scope of the disclosure.

## Claims

1. A method for obtaining a service reception state of a multimedia broadcast multicast service, MBMS, of one or more user equipments, UEs, by a network side device, comprising steps of:
setting (S101), by the network side device, an indication indicating one or more UEs to respond the service reception state of the multimedia broadcast multicast service, MBMS, in an MBMS point-to-multipoint control channel, MCCH, message;
transmitting (S101), by the network side device, to the one or more UEs the indication to respond the service reception state of the MBMS; and
receiving (S102), by the network side device, the service reception state of the MBMS responded by the one or more UEs according to the indication,
wherein the step of setting (S101) comprises:
setting in the MCCH message a third indication specifying one or more UEs to respond the service reception states of all MBMSs or of one or more specific MBMSs; or
setting in MBMS configuration information of the MCCH message a fourth indication specifying one or more UEs to respond the service reception state of the MBMS,
obtaining, by the network side device, the service reception state of the specified MBMSs or of the MBMS from the UEs specified through the third indication or the fourth indication,
the method is **characterized by** further comprising steps of:
broadcasting, by the network side device, a time window for the one or more UEs to respond the service reception state of the specified MBMSs or of the MBMS.

2. The method according to claim 1, further comprising:
setting in a system broadcast message a first indication indicating all the UEs to respond the service reception state of the MBMS; or
setting in an multicast broadcast single frequency network, MBSFN, configuration information of the system broadcast message a second indication indicating the one or more UEs receiving the MBMS from a corresponding MBSFN area to respond the service reception state of the MBMS.

3. The method according to claim 2, wherein the system broadcast message comprises a system information block 13, SIB 13.

4. The method according to claim 1, wherein the MCCH message comprises a signaling message notifying a content change of the MCCH and wherein the step of setting an indication indicating the one or more UEs to respond the service reception state of the specified MBMSs or of the MBMS comprises:
making remaining bits except bits which represent the content change of the MCCH corresponding to each MBSFN area in the signaling message used to notify the content change of the MCCH or remaining values except values which indicate the content change of the MCCH in the signaling message indicate the one or more UEs to respond the service reception state of the specified MBMSs or of the MBMS.

5. The method according to claim 4, wherein the signaling message comprises an MCCH message.

6. The method according to any one of claims 2 or 3 wherein the service reception state of the MBMS responded by the one or more UEs according to the second indication comprises: an MBSFN area ID information corresponding to the service reception state of the MBMS responded by the one or more UEs.

7. The method according to claim 6, wherein the service reception state of the MBMS responded by the one or more UEs according to the second indication comprises an MBMS ID information which corresponds to each service reception state of the MBMS responded by the one or more UEs.

8. A network side device for obtaining a service reception state of a multimedia broadcast multicast service, MBMS, of one or more user equipments, UEs, comprising:
a transmitting module (301), which is configured to set an indication indicating one or more UEs to respond the service reception state of the multimedia broadcast multicast service, MBMS, in an MBMS point-to-multipoint control channel, MCCH, message and transmit to the one or more UEs the indication to respond the service reception state of the MBMS; and
a receiving module (302), which is configured to receive the service reception state of the MBMS responded by the one or more UEs according to the indication,
wherein the transmitting module (301) is further configured to:
set in the MCCH message a third indication specifying one or more UEs to respond the service reception states of all MBMSs or of one or more specific MBMSs; or
set in an MBMS configuration information of the MCCH message a fourth indication specifying one or more UEs to respond the service reception state of the MBMS,
wherein the receiving module is further configured to obtain the service reception state of the specified MBMSs or of the MBMS from the UEs specified through the third indication or the fourth indication,
the device is **characterized in that** the transmitting module (301) is further configured to:
broadcast a time window for the one or more UEs to respond the service reception state of the specified MBMSs or of the MBMS.

9. The device according to claim 8, wherein
the transmitting module (301) is configured to set in a system broadcast message a first indication indicating all the UE(s) to respond the service reception state of the one or more specific MBMSs or
the transmitting module (301) is configured to set in an MBSFN configuration information of the system broadcast message a second indication indicating the one or more UEs receiving the MBMS from a corresponding MBSFN area to respond the service reception state of the MBMS;
wherein the transmitting module (301) is configured to set remaining bits except bits which represent the content change of the MCCH corresponding to each MBSFN area in the signaling message used to notify the content change of the MCCH or remaining values except values which indicate the content change of the MCCH in the signaling message, so as to indicate the one or more UEs to respond the service reception state of the specified MBMSs or of the MBMS.

10. A method for responding a service reception state of a multimedia broadcast multicast service, MBMS,
comprising steps of:
receiving (S401), by a user equipment, UE, a message with an indication indicating one or more UEs to respond the service reception state of the MBMS, wherein the message comprises an MBMS point-to-multipoint control channel, MCCH, message to notify the one or more UEs to respond the service reception state of the MBMS; and
transmitting (S402), by the UE, the service reception state of the MBMS according to the indication to a network side device,
wherein
a third indication specifying one or more UEs to respond the service reception states of all MBMSs or of one or more specific MBMSs is set in the MCCH message; or
a fourth indication specifying one or more UEs to respond the service reception state of the MBMS is set in the MBMS configuration information of the MCCH message,
determining, by the UE, whether or not to send the service reception state of the specified MBMSs or of the MBMS to the network side device in accordance with the third indication or the fourth indication,
the method is **characterized in that**:
a time window for the one or more UEs to respond the service reception state of the specified MBMSs or of the MBMS is broadcasted by the network side device and received by the UE.

11. The method according to claim 10, wherein the service reception state of the specified MBMSs or of the MBMS comprises MBSFN area identity, ID, information corresponding to the service reception state of the specified MBMSs or of the MBMS responded by the UE.

12. The method according to claim 11, wherein the service reception state of the specified MBMSs or of the MBMS further comprises an MBMS ID information which corresponds to each service reception state of the specified MBMSs or of the MBMS responded by the UE.

13. A user equipment, UE, comprising:
a receiving module (501), which is configured to receive a message with an indication indicating one or more UEs to respond the service reception state of the MBMS, wherein the message comprises an MBMS point-to-multipoint control channel, MCCH, message to notify the one or more UEs to respond the service reception state of the MBMS; and
a transmitting module (502), which is configured to transmit the service reception state of the MBMS according to the indication to a network side device,
wherein
a third indication specifying one or more UEs to respond the service reception states of all MBMSs or of one or more specific MBMSs is set in the MCCH message; or
a fourth indication specifying one or more UEs to respond the service reception state of the MBMS is set in the MBMS configuration information of the MCCH message,
wherein the UE is further configure to determine whether or not to send the service reception state of the specified MBMSs or of the MBMS to the network side device in accordance with the third indication or the fourth indication,
the UE is **characterized in that**:
a time window for the one or more UEs to respond the service reception state of the specified MBMSs or of the MBMS is broadcasted by the network side device and received by the UE.

14. The UE according to claim 13, wherein the service reception state of the specified MBMSs or of the MBMS comprises an MBSFN area ID information corresponding to the service reception state of the specified MBMSs or of the MBMS responded by the UE; and wherein the service reception state of the specified MBMSs or of the MBMS further comprises MBMS ID information corresponding to the service reception state of the specified MBMSs or of the MBMS responded by the UE.

## Patentansprüche

1. Verfahren zum Erhalten eines Dienstempfangsstatus eines Multimedia-Broadcast-Multicast-Dienstes, MBMS, eines oder mehrerer Benutzergeräte, UEs, durch eine netzwerkseitige Vorrichtung, umfassend die Schritte:
Festlegen (S101), durch die netzwerkseitige Vorrichtung, einer Kennung, die eines oder mehrere UEs anweist, den Dienstempfangsstatus des Multimedia-Broadcast-Multicast-Dienstes, MBMS, in einer MBMS-Punkt-zu-Mehrpunkt-Steuerkanal-, MCCH, Nachricht rückzumelden;
Senden (S101), durch die netzwerkseitige Vorrichtung, an das eine oder die mehreren UEs, der Kennung, den Dienstempfangsstatus des MBMS rückzumelden; und
Empfangen (S102), durch die netzwerkseitige Vorrichtung, des Dienstempfangsstatus des MBMS, der von dem einen oder den mehreren UEs gemäß der Kennung rückgemeldet wurde,
wobei der Schritt des Festlegens (S101) umfasst:
Festlegen, in der MCCH-Nachricht, einer dritten Kennung, die eines oder mehrere UEs spezifiziert, die Dienstempfangszustände aller MBMSs oder eines oder mehrerer spezifischer MBMSs rückzumelden; oder
Festlegen, in MBMS-Konfigurationsinformationen der MCCH-Nachricht, einer vierten Kennung, die eine oder mehrere UEs spezifiziert, den Dienstempfangsstatus des MBMS rückzumelden, Erhalten, durch die netzwerkseitige Vorrichtung, des Dienstempfangsstatus der spezifizierten MBMSs oder des MBMS von den durch die dritte Kennung oder die vierte Kennung spezifizieren UEs,
wobei das Verfahren **dadurch gekennzeichnet ist, dass** es ferner die Schritte umfasst des:
Broadcast-Sendens, durch die netzwerkseitige Vorrichtung, eines Zeitfensters für das eine oder die mehreren UEs, um den Dienstempfangsstatus der spezifizierten MBMS oder des MBMS rückzumelden.

2. Verfahren nach Anspruch 1, ferner umfassend:
Festlegen, in einer System-Broadcast-Nachricht, einer ersten Kennung, die alle UEs anweist, den Dienstempfangsstatus des MBMS rückzumelden; oder
Festlegen, in einer Multicast-Broadcast-Einzelfrequenznetz-, MBSFN, Konfigurationsinformation der System-Broadcast-Nachricht, einer zweiten Kennung, die das eine oder die mehreren UEs, die den MBMS von einem entsprechenden MBSFN-Bereich empfangen, anweist, den Dienstempfangsstatus des MBMS rückzumelden.

3. Verfahren nach Anspruch 2, wobei die System-Broadcast-Nachricht einen Systeminformationsblock 13, SIB 13, umfasst.

4. Verfahren nach Anspruch 1, wobei die MCCH-Nachricht eine Signalisierungsnachricht umfasst, die eine Inhaltsänderung des MCCH meldet, und wobei der Schritt des Festlegens einer Kennung, die das eine oder die mehreren UEs anweist, den Dienstempfangsstatus der spezifizierten MBMSs oder des MBMS rückzumelden, umfasst:
Bewerkstelligen, dass verbleibende Bits, mit Ausnahme von Bits, die die Inhaltsänderung des MCCH darstellen, die jedem MBSFN-Bereich in der Signalisierungsnachricht entsprechen, zum Melden der Inhaltsänderung des MCCH verwendet werden, oder verbleibende Werte, mit Ausnahme von Werten, die die Inhaltsänderung des MCCH in der Signalisierungsnachricht angeben, das eine oder die mehreren UEs anweisen, den Dienstempfangsstatus der spezifizierten MBMSs oder des MBMS rückzumelden.

5. Verfahren nach Anspruch 4, wobei die Signalisierungsnachricht eine MCCH-Nachricht umfasst.

6. Verfahren nach einem der Ansprüche 2 oder 3, wobei der Dienstempfangsstatus des MBMS, der von dem einen oder den mehreren UEs gemäß der zweiten Kennung rückgemeldet wird, umfasst:
eine MBSFN-Bereichs-ID-Information, die dem Dienstempfangsstatus des MBMS entspricht, der von dem einen oder den mehreren UEs rückgemeldet wird.

7. Verfahren nach Anspruch 6, wobei der Dienstempfangsstatus des MBMS, den von dem einen oder den mehreren UEs gemäß der zweiten Kennung rückgemeldet wird, eine MBMS-ID-Information umfasst, die jedem Dienstempfangsstatus des MBMS entspricht, der von dem einen oder den mehreren UEs rückgemeldet wird.

8. Netzwerkseitige Vorrichtung zum Erhalten eines Dienstempfangsstatus eines Multimedia-Broadcast-Multicast-Dienstes, MBMS, einer oder mehrerer Benutzergeräte, UEs, umfassend:
ein Sendemodul (301), das konfiguriert ist, eine Kennung festzulegen, die eines oder mehrere UEs anweist, den Dienstempfangsstatus des Multicast-Multicast-Multimediadienstes, MBMS, in einer MBMS-Punkt-zu-Mehrpunkt-Steuerkanal-, MCCH, Nachricht rückzumelden, und die Kennung, den Dienstempfangsstatus des MBMS rückzumelden, an das eine oder die mehreren UEs zu senden; und
ein Empfangsmodul (302), das konfiguriert ist, den Dienstempfangsstatus des MBMS, der von dem einen oder den mehreren UEs gemäß der Kennung rückgemeldet wird, zu empfangen,
wobei das Sendemodul (301) ferner konfiguriert ist zum:
Festlegen, in der MCCH-Nachricht, einer dritten Kennung, die eines oder mehrere UEs spezifiziert, um die Dienstempfangszustände aller MBMSs oder eines oder mehrerer spezifischer MBMSs rückzumelden; oder
Festlegen, in einer MBMS-Konfigurationsinformation der MCCH-Nachricht, einer vierten Kennung, die eines oder mehrere UEs anweist, den Dienstempfangsstatus des MBMS rückzumelden,
wobei das Empfangsmodul ferner konfiguriert ist, den Dienstempfangsstatus der spezifizierten MBMSs oder des MBMS von den durch die dritte Kennung oder die vierte Kennung spezifizierten UEs zu erhalten,
wobei die Vorrichtung **dadurch gekennzeichnet ist, dass** das Sendemodul (301) ferner konfiguriert ist zum:
Broadcast-Senden eines Zeitfensters für das eine oder die mehreren UEs, um den Dienstempfangsstatus der spezifizierten MBMSs oder des MBMS rückzumelden.

9. Vorrichtung nach Anspruch 8, wobei
das Sendemodul (301) konfiguriert ist, in einer System-Broadcast-Nachricht eine erste Kennung festzulegen, die alle UE(s) anweist, den Dienstempfangsstatus des einen oder der mehreren spezifischen MBMS rückzumelden, oder
das Sendemodul (301) konfiguriert ist, in einer MBSFN-Konfigurationsinformation der System-Broadcast-Nachricht eine zweite Kennung festzulegen, die das eine oder die mehreren UEs, die den MBMS von einem entsprechenden MBSFN-Bereich empfangen, anweist, den Dienstempfangsstatus des MBMS rückzumelden;
wobei das Sendemodul (301) konfiguriert ist, verbleibende Bits festzulegen, mit Ausnahme von Bits, die die Inhaltsänderung des MCCH darstellen, die jedem MBSFN-Bereich in der Signalisierungsnachricht entspricht, um verwendet werden, die Inhaltsänderung des MCCH zu melden, oder verbleibende Werte, mit Ausnahme von Werten, die die Inhaltsänderung des MCCH in der Signalisierungsnachricht angeben, um das eine oder die mehreren UE anzuweisen, den Dienstempfangsstatus der spezifizierten MBMS oder des MBMS rückzumelden.

10. Verfahren zur Rückmeldung eines Dienstempfangsstatus eines Multimedia-Broadcast-Multicast-Dienstes, MBMS, umfassend die Schritte:
Empfangen (S401), durch ein Benutzergerät, UE, einer Nachricht mit einer Kennung, die eines oder mehrere UEs anweist, den Dienstempfangsstatus des MBMS rückzumelden, wobei die Nachricht eine MBMS-Punkt-zu-Mehrpunkt-Steuerkanal-, MCCH, Nachricht umfasst, um dem einen oder den mehreren UEs zu melden, den Dienstempfangsstatus des MBMS rückzumelden; und
Senden (S402), durch das UE, des Dienstempfangsstatus des MBMS gemäß der Kennung an eine netzwerkseitige Vorrichtung, wobei eine dritte Kennung, die eines oder mehrere UEs spezifiziert, um die Dienstempfangszustände aller MBMSs oder eines oder mehrerer spezifischer MBMSs rückzumelden, in der MCCH-Nachricht festgelegt wird; oder
eine vierte Kennung, die eine oder mehrere UEs spezifiziert, um den Dienstempfangsstatus des MBMS rückzumelden, in der MBMS-Konfigurationsinformation der MCCH-Nachricht festgelegt wird,
Bestimmen, durch das UE, ob der Dienstempfangsstatus der spezifizierten MBMSs oder des MBMS an die netzwerkseitige Vorrichtung gesendet werden soll oder nicht, in Übereinstimmung mit der dritten Kennung oder der vierten Kennung,
wobei das Verfahren **dadurch gekennzeichnet ist, dass**:
ein Zeitfenster für das eine oder die mehreren UEs, um den Dienstempfangsstatus der spezifizierten MBMSs oder des MBMS rückzumelden, von der netzwerkseitigen Vorrichtung Broadcastgesendet und von dem UE empfangen wird.

11. Verfahren nach Anspruch 10, wobei der Dienstempfangsstatus der spezifizierten MBMS oder des MBMS MBSFN-Bereichs-Identitäts-, ID, Informationen umfasst, die dem Dienstempfangsstatus der spezifizierten MBMSs oder des MBMS, der von dem UE rückgemeldet wird, entspricht.

12. Verfahren nach Anspruch 11, wobei der Dienstempfangsstatus der spezifizierten MBMSs oder des MBMS ferner eine MBMS-ID-Information umfasst, die jedem Dienstempfangsstatus der spezifizierten MBMSs oder des MBMS entspricht, der von dem UE rückgemeldet wird.

13. Benutzergerät, UE, umfassend:
ein Empfangsmodul (501), das konfiguriert ist, eine Nachricht mit einer Kennung zu empfangen, die eines oder mehrere UEs anweist, den Dienstempfangsstatus des MBMS rückzumelden, wobei die Nachricht eine MBMS-Punkt-zu-Mehrpunkt-Steuerkanal-, MCCH-, Nachricht umfasst, um dem einen oder den mehreren UEs zu melden, den Dienstempfangsstatus des MBMS rückzumelden; und
ein Sendemodul (502), das konfiguriert ist, den Dienstempfangsstatus des MBMS gemäß der Kennung an eine netzwerkseitige Vorrichtung zu senden, wobei
eine dritte Kennung, die eines oder mehrere UEs anweist, die Dienstempfangszustände aller MBMSs oder eines oder mehrerer spezifischer MBMSs rückzumelden, in der MCCH-Nachricht festgelegt ist; oder
eine vierte Kennung, die eines oder mehrere UEs anweist, den Dienstempfangsstatus des MBMS rückzumelden, in der MBMS-Konfigurationsinformation der MCCH-Nachricht festgelegt ist,
wobei das UE ferner konfiguriert ist, zu bestimmen, ob der Dienstempfangsstatus der spezifizierten MBMSs oder des MBMS an die netzwerkseitige Vorrichtung gesendet werden soll oder nicht, in Übereinstimmung mit der dritten Kennung oder der vierten Kennung,
wobei das UE **dadurch gekennzeichnet ist, dass**:
ein Zeitfenster für das eine oder die mehreren UEs, um den Dienstempfangsstatus der spezifizierten MBMSs oder des MBMS rückzumelden, von der netzwerkseitigen Vorrichtung Broadcastgesendet und von dem UE empfangen wird.

14. UE nach Anspruch 13, wobei der Dienstempfangsstatus der spezifizierten MBMSs oder des MBMS eine MBSFN-Bereichs-ID-Information umfasst, die dem Dienstempfangsstatus der spezifizierten MBMS oder des MBMS entspricht, der von dem UE rückgemeldet wird; und
wobei der Dienstempfangsstatus der spezifizierten MBMSs oder des MBMS ferner MBMS-ID-Informationen umfasst, die dem Dienstempfangsstatus der spezifizierten MBMSs oder des MBMS entspricht, der von dem UE rückgemeldet wird.

## Revendications

1. Procédé d'obtention d'un état de réception de service d'un service de radiodiffusion multimédia multidestinataire, MBMS, d'un ou plusieurs équipements d'utilisateur, UE, par un dispositif côté réseau, comprenant les étapes ci-dessous consistant à :
définir (S101), par le biais du dispositif côté réseau, une indication indiquant à un ou plusieurs équipements UE de répondre à l'état de réception de service du service de radiodiffusion multimédia multidestinataire, MBMS, dans un message de canal de commande point-multipoint, MCCH, de service MBMS ;
transmettre (S101), par le biais du dispositif côté réseau, à un ou plusieurs équipements UE, l'indication de répondre à l'état de réception de service du service MBMS ; et
recevoir (S102), par le biais du dispositif côté réseau, l'état de réception de service du service MBMS auquel ont répondu ledit un ou lesdits plusieurs équipements UE selon l'indication ;
dans lequel l'étape de définition (S101) comprend les étapes ci-dessous consistant à :
définir, dans le message de canal MCCH, une troisième indication spécifiant à un ou plusieurs équipements UE de répondre aux états de réception de service de tous les services MBMS ou d'un ou plusieurs services MBMS spécifiques ; ou
définir, dans des informations de configuration de service MBMS du message de canal MCCH, une quatrième indication spécifiant à un ou plusieurs équipements UE de répondre à l'état de réception de service du service MBMS ;
obtenir, par le biais du dispositif côté réseau, l'état de réception de service des services MBMS spécifiés ou du service MBMS, à partir des équipements UE spécifiés à travers la troisième indication ou la quatrième indication ;
dans lequel le procédé est **caractérisé en ce qu'**il comprend en outre l'étape ci-dessous consistant à :
diffuser, par le biais du dispositif côté réseau, une fenêtre temporelle pour permettre audit un ou auxdits plusieurs équipements UE de répondre à l'état de réception de service des services MBMS spécifiés ou du service MBMS.

2. Procédé selon la revendication 1, comprenant en outre les étapes ci-dessous consistant à :
définir, dans un message de diffusion système, une première indication indiquant à tous les équipements UE de répondre à l'état de réception de service du service MBMS ; ou
définir, dans des informations de configuration de réseau de diffusion/multidiffusion monofréquence, MBSFN, du message de diffusion système, une deuxième indication indiquant audit un ou auxdits plus équipements UE recevant le service MBMS en provenance d'une zone de réseau MBSFN correspondante, de répondre à l'état de réception de service du service MBMS.

3. Procédé selon la revendication 2, dans lequel le message de diffusion système comprend un bloc d'informations système 13, SIB 13.

4. Procédé selon la revendication 1, dans lequel le message de canal MCCH comprend un message de signalisation notifiant une modification de contenu du canal MCCH, et dans lequel l'étape consistant à définir une indication indiquant audit un ou auxdits plusieurs équipements UE de répondre à l'état de réception de service des services MBMS spécifiés ou du service MBMS comprend l'étape ci-dessous consistant à :
amener des bits restants, à l'exception de bits qui représentent la modification de contenu du canal MCCH correspondant à chaque zone de réseau MBSFN dans le message de signalisation utilisé en vue de notifier la modification de contenu du canal MCCH, ou des valeurs restantes, à l'exception de valeurs qui indiquent la modification de contenu du canal MCCH dans le message de signalisation, à indiquer audit un ou auxdits plusieurs équipements UE de répondre à l'état de réception de service des services MBMS spécifiés ou du service MBMS.

5. Procédé selon la revendication 4, dans lequel le message de signalisation comprend un message de canal MCCH.

6. Procédé selon l'une quelconque des revendications 2 et 3, dans lequel l'état de réception de service du service MBMS auquel ont répondu ledit un ou lesdits plusieurs équipements UE selon la deuxième indication comprend : des informations d'identité, ID, de zone de réseau MBSFN correspondant à l'état de réception de service du service MBMS auquel ont répondu ledit un ou lesdits plusieurs équipements UE.

7. Procédé selon la revendication 6, dans lequel l'état de réception de service du service MBMS auquel ont répondu ledit un ou lesdits plusieurs équipements UE selon la deuxième indication comprend des informations d'identité, ID, de service MBMS qui correspondent à chaque état de réception de service du service MBMS auquel ont répondu ledit un ou lesdits plusieurs équipements UE.

8. Dispositif côté réseau destiné à obtenir un état de réception de service d'un service de radiodiffusion multimédia multidestinataire, MBMS, d'un ou plusieurs équipements d'utilisateur, UE, comprenant :
un module d'émission (301), qui est configuré de manière à définir une indication indiquant à un ou plusieurs équipements UE de répondre à l'état de réception de service du service de radiodiffusion multimédia multidestinataire, MBMS, dans un message de canal de commande point-multipoint, MCCH, de service MBMS, et à transmettre, audit un ou auxdits plusieurs équipements UE, l'indication de répondre à l'état de réception de service du service MBMS ; et
un module de réception (302), qui est configuré de manière à recevoir l'état de réception de service du service MBMS auquel ont répondu ledit un ou lesdits plusieurs équipements UE selon l'indication ;
dans lequel le module d'émission (301) est en outre configuré de manière à :
définir, dans le message de canal MCCH, une troisième indication spécifiant à un ou plusieurs équipements UE de répondre aux états de réception de service de tous les services MBMS ou d'un ou plusieurs services MBMS spécifiques ; ou
définir, dans des informations de configuration de service MBMS du message de canal MCCH, une quatrième indication spécifiant à un ou plusieurs équipements UE de répondre à l'état de réception de service du service MBMS ;
dans lequel le module de réception est en outre configuré de manière à obtenir l'état de réception de service des services MBMS spécifiés ou du service MBMS, à partir des équipements UE spécifiés à travers la troisième indication ou la quatrième indication ;
dans lequel le dispositif est **caractérisé en ce que** le module d'émission (301) est en outre configuré de manière à :
diffuser une fenêtre temporelle pour permettre audit un ou auxdits plusieurs équipements UE de répondre à l'état de réception de service des services MBMS spécifiés ou du service MBMS.

9. Dispositif selon la revendication 8, dans lequel :
le module d'émission (301) est configuré de manière à définir, dans un message de diffusion système, une première indication indiquant à tous les équipements UE de répondre à l'état de réception de service dudit un ou desdits plusieurs services MBMS spécifiques ; ou
le module d'émission (301) est configuré de manière à définir, dans des informations de configuration de réseau MBSFN du message de diffusion système, une deuxième indication indiquant audit un ou auxdits plus équipements UE recevant le service MBMS en provenance d'une zone de réseau MBSFN correspondante, de répondre à l'état de réception de service du service MBMS ;
dans lequel le module d'émission (301) est configuré de manière à définir des bits restants, à l'exception de bits qui représentent la modification de contenu du canal MCCH correspondant à chaque zone de réseau MBSFN dans le message de signalisation utilisé en vue de notifier la modification de contenu du canal MCCH, ou des valeurs restantes, à l'exception de valeurs qui indiquent la modification de contenu du canal MCCH dans le message de signalisation, de manière à indiquer audit un ou auxdits plusieurs équipements UE de répondre à l'état de réception de service des services MBMS spécifiés ou du service MBMS.

10. Procédé de réponse à un état de réception de service d'un service de radiodiffusion multimédia multidestinataire, MBMS, comprenant les étapes ci-dessous consistant à :
recevoir (S401), par le biais d'un équipement d'utilisateur, UE, un message avec une indication indiquant à un ou plusieurs équipements UE de répondre à l'état de réception de service du service MBMS, dans lequel le message comprend un message de canal de commande point-multipoint, MCCH, de service MBMS pour notifier audit un ou auxdits plusieurs équipements UE de répondre l'état de réception de service du service MBMS ; et
transmettre (S402), par le biais de l'équipement UE, l'état de réception de service du service MBMS, conformément à l'indication, à un dispositif côté réseau,
dans lequel :
une troisième indication spécifiant à un ou plusieurs équipements UE de répondre aux états de réception de service de tous les services MBMS ou d'un ou plusieurs services MBMS spécifiques est définie dans le message de canal MCCH ; ou
une quatrième indication spécifiant à un ou plusieurs équipements UE de répondre à l'état de réception de service du service MBMS est définie dans les informations de configuration de service MBMS du message de canal MCCH ;
déterminer, par le biais de l'équipement UE, s'il convient ou non d'envoyer l'état de réception de service des services MBMS spécifiés ou du service MBMS, au dispositif côté réseau, conformément à la troisième indication ou à la quatrième indication,
dans lequel le procédé est **caractérisé en ce que** :
une fenêtre temporelle permettant audit un ou auxdits plusieurs équipements UE de répondre à l'état de réception de service des services MBMS spécifiés ou du service MBMS est diffusée par le dispositif côté réseau, et est reçue par l'équipement UE.

11. Procédé selon la revendication 10, dans lequel l'état de réception de service des services MBMS spécifiés ou du service MBMS comprend des informations d'identité, ID, de zone de réseau MBSFN correspondant à l'état de réception de service des services MBMS spécifiés ou du service MBMS auquel a répondu l'équipement UE.

12. Procédé selon la revendication 11, dans lequel l'état de réception de service des services MBMS spécifiés ou du service MBMS comprend en outre des informations d'identité, ID, de service MBMS qui correspondent à chaque état de réception de service des services MBMS spécifiés ou du service MBMS auquel a répondu l'équipement UE.

13. Équipement d'utilisateur, UE, comprenant :
un module de réception (501), qui est configuré de manière à recevoir un message avec une indication indiquant à un ou plusieurs équipements UE de répondre à l'état de réception de service du service MBMS, dans lequel le message comprend un message de canal de commande point-multipoint, MCCH, de service MBMS, pour notifier audit un ou auxdits plusieurs équipements UE de répondre l'état de réception de service du service MBMS ; et
un module d'émission (502), qui est configuré de manière à transmettre l'état de réception de service du service MBMS, conformément à l'indication, à un dispositif côté réseau,
dans lequel :
une troisième indication spécifiant à un ou plusieurs équipements UE de répondre aux états de réception de service de tous les services MBMS ou d'un ou plusieurs services MBMS spécifiques est définie dans le message de canal MCCH ; ou
une quatrième indication spécifiant à un ou plusieurs équipements UE de répondre à l'état de réception de service du service MBMS est définie dans les informations de configuration de service MBMS du message de canal MCCH ;
dans lequel l'équipement UE est en outre configuré de manière à déterminer s'il convient ou non d'envoyer l'état de réception de service des services MBMS spécifiés ou du service MBMS, au dispositif côté réseau, conformément à la troisième indication ou à la quatrième indication ;
dans lequel l'équipement UE est **caractérisé en ce que** :
une fenêtre temporelle permettant audit un ou auxdits plusieurs équipements UE de répondre à l'état de réception de service des services MBMS spécifiés ou du service MBMS est diffusée par le dispositif côté réseau, et est reçue par l'équipement UE.

14. Équipement UE selon la revendication 13, dans lequel l'état de réception de service des services MBMS spécifiés ou du service MBMS comprend des informations d'identité, ID, de zone de réseau MBSFN correspondant à l'état de réception de service des services MBMS spécifiés ou du service MBMS auquel a répondu l'équipement UE ; et
dans lequel l'état de réception de service des services MBMS spécifiés ou du service MBMS comprend en outre des informations d'identité, ID, de service MBMS correspondant à l'état de réception de service des services MBMS spécifiés ou du service MBMS auquel a répondu l'équipement UE.
